# EUROPEAN PATENT APPLICATION

(11) **EP 4 071 669 A1**
(43) Date of publication of application: **12.10.2022**
(21) Application number: 21212402.8
(22) Date of filing: 03.12.2021
(51) Int. Cl.: G06N 3/02, G06N 20/00, H04M 3/51, G06Q 10/06

(54) **SYSTEMS AND METHODS FOR FORECASTING USING EVENTS**

(30) Priority: 08.12.2020 US 202017114602
(71) Applicant: Verint Americas Inc., Melville, NY 11747 (US)
(72) Inventor: Silverman, Jonathan, Palo Alto, 94306 (US); Mortimer, Nicholas, Sheffield, S3 8BY (GB)
(74) Representative: The IP Asset Partnership Limited

(57) **Abstract**

In an entity such as a call center, back office, or retail operation, external event data is recorded along with call volume information for a plurality of time intervals. Based on the recorded event data and call volume for the plurality of intervals, a model is trained to predict call (or other communication) volume for a specified time interval using the external event data. The external event data may include data about one or more events that may affect the demand received by the entity. When the predicted call volume is significantly above or below what would be predicted for the entity using historical data alone, an indicator may be displayed to a user or administrator that identifies the external event that is responsible for the lower or higher prediction. The call volume prediction may be used to schedule one or more agents (or other employees) to work during the specified time interval.

## Description

### BACKGROUND

In many industries forecasting is used to predict demand for a particular time period or time interval. For example, a call center may develop forecasts to predict call volumes for particular time intervals, and the predicted call volumes may be used to determine the number of agents that should be scheduled to handle the predicted call volumes to maintain a desired service level. Other customer service entities such as back office operations centers and retail branch offices of banks employ similar forecasting techniques to predict future demands.

Generally, forecasts are done using historical data. The historical data may include data indicating the demand measured at certain time intervals in the past. For call centers, the historical data may include the call volume measured at various time intervals at the call center.

However, there are drawbacks associated with forecasting using historical data alone. In particular, historical data-based forecasts may fail to account for current events data or other information that may affect demand, but that are not reflected in the historical data. The other information may include intelligence from speech and/or text analytics applications.

### SUMMARY

For an entity such as a call center, event data is recorded along with call volume information for a plurality of time intervals. Based on the recorded event data and call volume for the plurality of intervals, a model is trained to predict call volume for a specified time interval using the event data. The event data may include data about one or more events that may affect the demand received by the entity. The events may include weather for a particular zip code, political events, television shows, news events, sporting events, etc. The events may also include intelligence from speech and/or text analytics applications. When the predicted call volume is significantly above or below what would be predicted for the entity using historical data alone, an indicator may be displayed to a user or administrator that identifies the external event that is responsible for the lower or higher prediction. The call volume prediction may be used to schedule one or more agents to work during the specified time interval.

As will be discussed further below, the embodiments described herein provide many benefits over prior forecasting systems. First, because each entity is different, different events may affect demand for different entities in different and unexpected ways. The present systems and methods use artificial intelligence to identify those events that have an effect on demand for an entity so that only those events that are likely to affect demand can be tracked and incorporated into forecasts. Second, by considering events (and event data) in forecast prediction models, the accuracy of forecasts is increased for call centers when compared to prediction models that only use historical demand data to make forecasts.

In one embodiment, a method for forecasting demand for an entity is provided. The method includes: receiving historical demand data for an entity by a computing device, wherein the historical demand data comprises a plurality of historical time intervals and demand data measured for each time interval of the plurality of time intervals; receiving event data by the computing device, wherein the event data comprises the plurality of historical time intervals and indicators of events that occurred during some or all of the plurality of historical time intervals; and training a first forecasting model using the received historical demand data and the received event data by the computing device.

Embodiments may include some or all of the following features. The method may further include: receiving an indicator of a future time interval by the computing device; determining event data for the future time interval by the computing device; and estimating demand for the future time interval using the first forecasting model and the determined event data for the future time interval by the computing device. The method may further include scheduling one or more agents to work during the future time interval based on the estimated demand. The demand data measured for a time interval may include call volume. The event data may include weather forecasts for a plurality of locations. The event data may include one or more of sporting event data, television or movie event data, and product launch data. The method may further include training a second forecasting model using the received historical demand data and without the received event data. The method may further include: receiving an indicator of a future time interval; determining event data for the future time interval; estimating first demand for the future time interval using the first forecasting model and the determined event data for the future time interval; estimating second demand for the future time interval using the second forecasting model; determining that a difference between the first demand and the second demand satisfies a threshold; and in response to the determination, displaying an indicator of an event from the event data for the future interval that is most likely responsible for the difference.

In an embodiment, a method for forecasting demand for an entity is provided. The method includes: receiving historical demand data for an entity by a computing device, wherein the historical demand data comprises a plurality of historical time intervals and demand data measured for each time interval of the plurality of time intervals; receiving event data by the computing device, wherein the event data comprises the plurality of historical time intervals and indicators of events that occurred during some or all of the plurality of historical time intervals; training a first forecasting model using the received historical demand data and the received event data by the computing device; and training a second forecasting model using the received historical demand data and without using the received event data by the computing device.

Embodiment may include some or all of the following features. The method may further include: receiving an indicator of a future time interval; determining event data for the future time interval; estimating first demand for the future time interval using the first forecasting model and the determined event data for the future time interval; estimating second demand for the future time interval using the second forecasting model; determining that a difference between the first demand and the second demand satisfies a threshold; and in response to the determination, displaying an indicator of an event from the event data for the future interval that is most likely responsible for the difference. The method may further include scheduling one or more agents to work during the future time interval based on the estimated first demand or second demand. The demand data measured for a time interval may include call volume. The event data may include weather forecasts for a plurality of locations. The event data may include one or more of sporting event data, television or movie event data, and product launch data.

In an embodiment, a system for forecasting demand for an entity is provided. The system includes at least one computing device; and a computer-readable medium storing instructions that when executed by the at least one computing device, cause the at least one computing device to: receive historical demand data for an entity, wherein the historical demand data comprises a plurality of historical time intervals and demand data measured for each time interval of the plurality of time intervals; receive event data, wherein the event data comprises the plurality of historical time intervals and indicators of events that occurred during some or all of the plurality of historical time intervals; and train a first forecasting model using the received historical demand data and the received event data.

Embodiments may include some or all of the following features. The system may include instructions that when executed by the at least one computing device, cause the at least one computing device to: receive an indicator of a future time interval by the computing device; determine event data for the future time interval by the computing device; and estimate demand for the future time interval using the first forecasting model and the determined event data for the future time interval by the computing device. The system may further include instructions that when executed by the at least one computing device, cause the at least one computing device to schedule one or more agents to work during the future time interval based on the estimated demand. The demand data measured for a time interval may include call volume. The event data may include weather forecasts for a plurality of locations. The event data may include one or more of sporting event data, television or movie event data, and product launch data.

This summary is provided to introduce a selection of concepts in a simplified form that are further described below in the detailed description. This summary is not intended to identify key features or essential features of the claimed subject matter, nor is it intended to be used to limit the scope of the claimed subject matter.

### BRIEF DESCRIPTION OF THE DRAWINGS

The foregoing summary, as well as the following detailed description of illustrative embodiments, is better understood when read in conjunction with the appended drawings. For the purpose of illustrating the embodiments, there is shown in the drawings example constructions of the embodiments; however, the embodiments are not limited to the specific methods and instrumentalities disclosed. In the drawings:
FIG. 1 is an illustration of an exemplary environment for generating forecasts for an entity;
FIG. 2 is an operational flow of an implementation of a method for generating a schedule based on predicted demand;
FIG. 3 is an operational flow of an implementation of a method for displaying events that affect a forecast to an administrator;
FIG. 4 is an illustration of a screenshot of a graphical user interface for displaying events that affect a forecast to an administrator;
FIG. 5 shows an exemplary computing environment in which example embodiments and aspects may be implemented.

### DETAILED DESCRIPTION

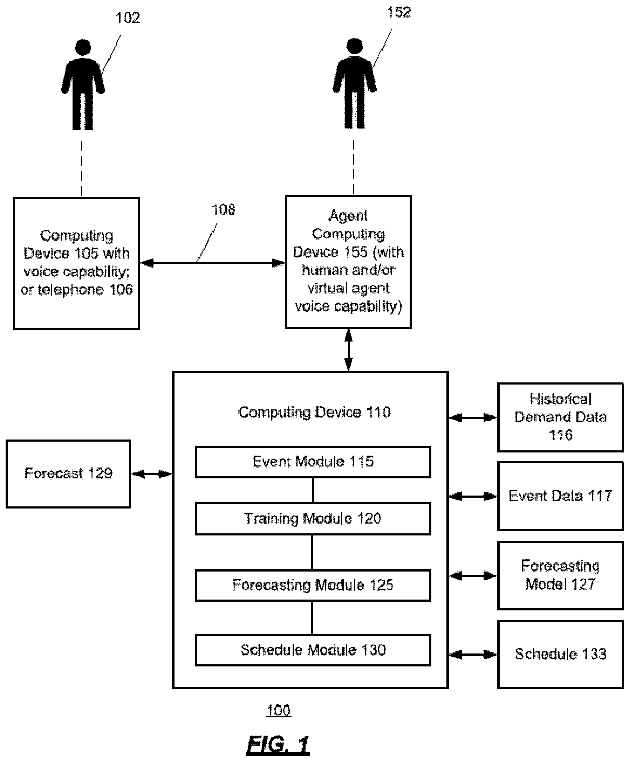

FIG. 1 is an illustration of an environment 100 for generating forecasts. The environment 100 may be implemented by a call center or any other entity that receives calls (or chats, electronic communications, or face-to-face in person communications) from customers or clients. A customer 102 may use a computing device 105 (or a telephone 106) to initiate a call with an agent 152 associated with the environment 100. The agent 152 may receive the call via a channel 108 such as a VOIP line, POTS line, or a cellular channel. Any channel suitable for voice communication may be used.

The agent 152 may receive the call from the customer 102 on an agent computing device 155. The agent computing device 155 may be equipped with both human and virtual voice agent capabilities.

Besides the agent 152, the call may also be received (at the same time or later) by a computing device 110 associated with the call center environment 100. The computing device 110 may provide one or more call center services to the customer 102 such as interactive voice response services ("IVR") where the user may be presented with an automated system that may determine the optimal agent 152 to direct the call, may determine the identity of the customer 102, or may retrieve other information from the customer in an automated way.

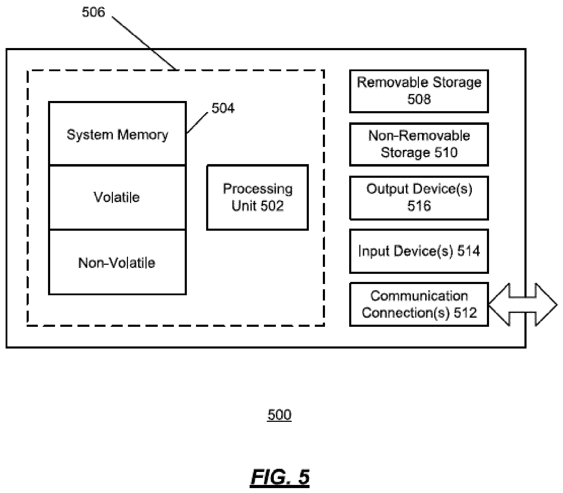

As may be appreciated, the computing device 105, agent computing device 155, and the computing device 110 may each be implemented by one or more general purpose computing devices such as the computing device 500 illustrated with respect to FIG. 5. Depending on the embodiment, the computing device 110 may be part of a voice recorder or other device performing functions in a call center. Note that the embodiments described herein are not limited to calls but may apply to any type of electronic communications that may be handled by an agent 152 in a call center such as emails, chats, tweets, etc.

Furthermore, the embodiments are not limited to call center applications and may be used in a variety of scenarios and locations including, but not limited to, back offices, retail environments, bank branches, etc. In such scenarios, the communications may include any type of electronic and physical communications including face-to-face communications.

As described above, in order to determine a number of agents 152 to use for an entity, the computing device 110 may generate a forecast 129 for a future time interval. Depending on the embodiment, each time interval may be approximately 15 minutes in length. Other size time intervals including but not limited to hours, days, weeks, months or years may be used.

The forecast 129 for a future time interval may indicate the demand that is expected to be received by an entity(e.g., call center, back office or retail branch) during the time interval. The demand may include statistics such as call volume, average handling time, and shrinkage. In addition, the demand may include demand for specific types of communications that may be received by the entity including but not limited to phone calls, emails, and chats, electronic work items, physical mail and face to face interactions. Other types of communications may be supported.

In some embodiments, a forecasting module 125 may generate a forecast 129 for a specified time interval. The generated forecast 129 may then be used by a schedule module 130 to generate a schedule 133 for the entity for the future interval. The schedule 133 may assign agents 152 to one or more queues for the future interval in a way that will meet one or more service goals for the queues given the generated forecast 129. The service goal may include an average wait time for callers to the entity. Other service goals may be supported.

The forecasting module 125 may generate a forecast 129 using one or more forecasting models 127 that were trained to generate forecasts 129 for intervals based on historical demand data 116. The historical demand data 116 may include measured demand for the call center from past intervals. The measured demand for a past interval may include the call volume received at the entity for the past interval. Other data indicative of demand may be included.

In some embodiments, the forecasting module 125 may generate a plurality of forecasting models 127 using a variety of methods including machine learning and statistical methods. Each model 127 may be trained with a different set of historical demand data 116 or using different weights and/or heuristics. Any type of prediction model may be used.

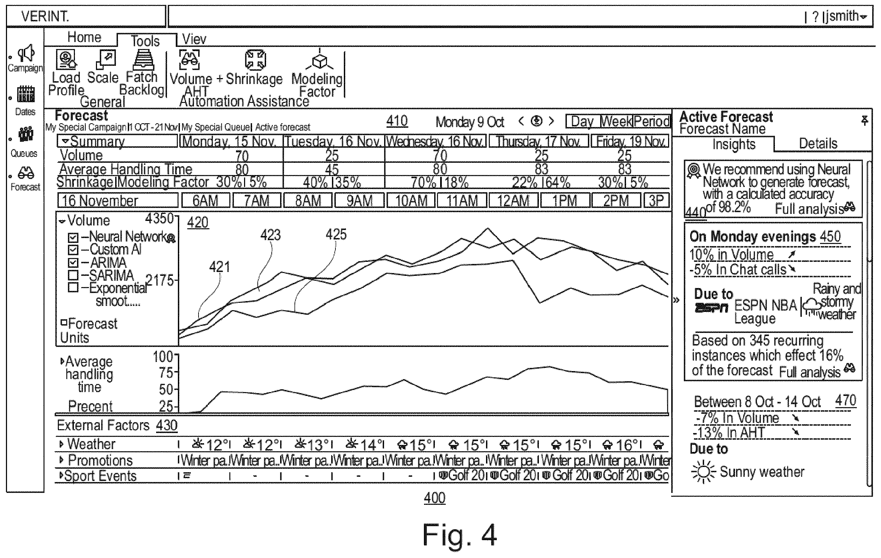

Where multiple forecasting models 127 are available, in some embodiments, the forecasting module 125 may allow an administrator to compare the forecasts 129 generated by each model 127. For example, the forecasts 129 may be displayed to the administrator in a graphical user interface such as the graphical user interface 400 of FIG. 4. The administrator may then select the model 127 whose forecast 129 that they would like to use.

In addition, in some embodiments, the forecasting module 125 may track the historical performance of each model 127 over time by comparing its forecasts 129 for intervals to the actual demand experienced by the entity for the intervals. The forecasting module 125 may then recommend the best performing model 127 to the administrator. As may be appreciated, because of different businesses or organizations associated with each entity (e.g., call center), some models 127 may perform better for different entities than other models 127.

In addition, to further improve the performance of forecasting models 127, the training module 120 may further consider event data 117 when training one or more forecasting modules 125. Event data 117 as used herein may be data, or data points, that relates to an event or happening that may affect the demand predicted by the forecasting module 125 for an interval. Example events may include events that are external to an entity such as sporting events, movie or television premiers, political events, weather events, financial events (e.g., stock increases or decreases, and earnings reports) and product release schedules of other entities. Other types of external events may be included.

The event data 117 may further include events that are internal to an entity. These internal events may include product releases of the entity, sales or marketing promotions ran by the entity, and financial events related to the entity. The internal events may further include information about the types of calls being received by the entity. For example, if the entity is receiving a larger than normal amount of complaints for a current interval, this may indicate that a larger call volume may be expected for a future interval.

As may be appreciated, the particular event data 117 that affects the demand for an entity may be dependent on a variety of factors such as a location of the entity or the industry associated with the entity. For example, an insurance company that serves North America may experience demand that is highly effected by weather conditions in certain zip codes. As another example, an entity that sells sporting goods may experience reduced demand when certain professional sporting events are taking place. In still another example, an entity that provides a stock trading application for smart phones may experience increased demand when the stock market is experiencing larger than normal losses or gains.

The event data 117 (historical and future) may be collected by the event module 115 from a variety of sources. These sources may include news feeds, weather feeds, and sports feeds, product release schedules, stock market data feeds, etc. Other sources may be used. In addition, the event data 117 may be received from the call center itself and may include event data 117 describing the category or sentiment of the calls or communications that have been received so far. For example, the event module 115 may receive data indicative of a sentiment analysis performed on some of all of the communications received by the entity.

In some embodiments, the data indicative of a sentiment analysis may include intelligence generated by one or more speech and/or text analysis application performed on communications received by the entity. For example, the speech and/or text application may process received communications and may determine that there has been a spike in negative calls or communications, or that the number of communications for technical support are less than expected for a current interval. Such information may indicate that future demand or work volume received by the entity for an upcoming interval may be less than (or more than) expected

The training module 120 may receive the event data 117 and may train a forecasting model 127 to generate forecast 129 using both the historical demand data 116 and the event data 117. The forecasting model 127 may take as an input collected event data 117 for a future interval and an identifier of the future interval and may generate a forecast 129 for the future interval that considers the event data 117 for that interval.

In some embodiments, the training module 120 may analyze the historical demand data 116 for a plurality of past intervals, and the event data 117 for those intervals, to determine which particular events are relevant for the entity associated with the call center. For example, an event such as an awards show on television may not significantly change the call demand for an entity such as a bank, but an event such as a change in interest rates by the federal reserve bank may. The training module 120 may determine those events that have an impact on demand for an entity using machine learning, for example.

In some embodiments, the training module 120 may train a forecasting model 127 that outputs an expected change in demand for an entity at a future interval due to events occurring during the interval as indicated by the event data 117. The forecast 129 for such a future interval may then be determined by adding (or subtracting) the change in demand predicted by the model 127 trained using the event data from the demand predicted by the model 127 trained using the historical demand data 116 alone. Alternatively, a single forecasting model 127 may be trained using the historical demand data 116 and the event data 117 as described above.

When the forecasting module 125 determined that demand for a future interval is expected to increase or decrease due to an upcoming event based on the forecasting model 127, a user or administrator may be alerted about the event in a graphical user interface such as the graphical user interface 400 of FIG. 4. The administrator may then, based on the alert, determine whether more or fewer agents should be scheduled during the future interval based on the alert.

The schedule module 130 generates a schedule 133 using the forecasts 129 generated by the forecasting module 125 for a plurality of further intervals. For example, the schedule module 130 may generate a schedule 133 for two weeks of time intervals for the call center. A schedule 133 may assign agents 152 to one or more queues for each interval of the plurality of intervals.

In some embodiments, the schedule module 130 may change or modify schedules for future intervals as new event data 117 is received. For example, events such as weather or stock prices may change rapidly or unexpectedly leading to a change in the predicted forecast 129 for an upcoming interval. Accordingly, as new event data 117 is received for a future interval, the forecasting module 125 may recalculate a forecast 129 for the interval, and if the forecasted demand changes, the schedule module 130 may update or revise the schedule 133 for the interval.

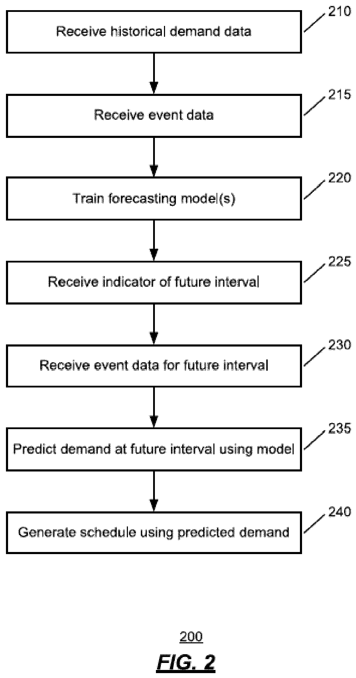

FIG. 2 is an illustration of a method 200 for generating a schedule using predicted demand. The method 200 may be performed by the computing device 110.

At 210, historical demand data is received. The historical demand data 116 may be received by the training module 120. The historical demand data 116 may include the measured demand data for an entity. The historical demand data 116 may include data such as the call volume received by the entity for each of a plurality of time intervals. Any method for generating historical demand data 116 may be used.

At 215, event data is received. The event data 117 may be received by the training module 120. The event data 117 may include data about events occurring during the past intervals that may, or may not, have affected the demand experienced by the entity for the past intervals. Example events include weather events, political events, sporting or media events, financial events, and product release or marketing events. The events may further include information or intelligence from speech and/or text analytics applications. Other types of events may be supported.

At 220, one or more forecasting models 127 may be trained. The forecasting models 127 may be trained by the training module 120 using the historical demand data 116 for the past intervals along with the event data 117 for the past intervals. Depending on the embodiment, multiple forecasting models 127 may be trained by the training module 120 using a variety of different artificial intelligence or statistical methods and techniques.

At 225, an indicator of a future interval is received. The indicator may be received by the forecasting module 125 from a user of administrator.

At 230, event data for the future interval is received. The event data 117 may be one or more events that are scheduled, known, or predicted to occur during the future interval. The event data 117 may be received by the forecasting module 125 from the event module 115. The event data may further include data indicative of a sentiment analysis performed on the communication received by the entity. The sentiment analysis may include the amount of negative or positive communications that are being received by the entity, for example.

At 235, demand for the future interval is predicted using the forecasting model. The demand may be part of the forecast 129 and may be predicted by the forecasting module 125 using the forecasting model 127 and the received event data 117 for the interval.

At 240, a schedule is generated using the predicted demand. The schedule 133 may be generated using the predicted demand from the forecast 129.

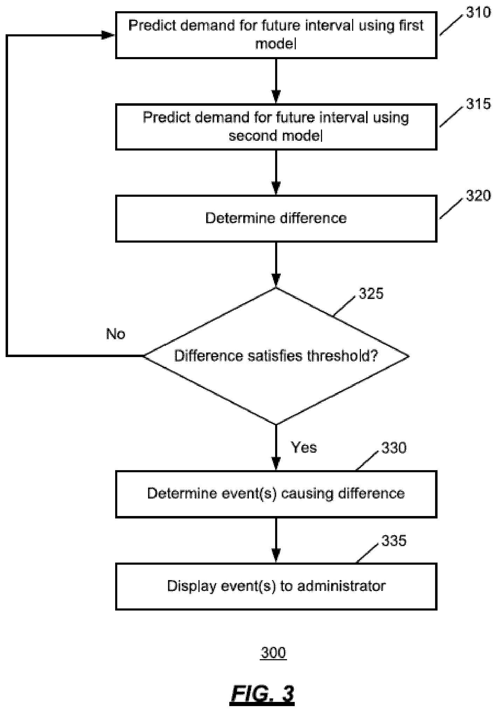

FIG. 3 is an illustration of a method 300 displaying events that may affect demand for a call center. The method 300 may be performed by the computing device 110.

At 310, demand for a future interval is predicted using a first model. The demand may be part of a forecast 129 and may be generated by the forecasting module 125 using a first forecasting model 127. Depending on the embodiment, the first forecasting model 127 may have been trained by the training module 120 using historical demand data 116, but not using event data 117.

At 315, demand for the future is predicted using a second model. The demand may be part of a forecast 129 and may be generated by the forecasting module 125 using a second forecasting model 127. Depending on the embodiment, the second forecasting model 127 may have been trained by the training module 120 using historical demand data 116 and using event data 117. Alternatively, or additionally, the first and second models 127 may be the same models.

At 320, a difference between the predicted demands is determined. The difference may be determined by the forecasting module 125. The difference may represent the disparity between the demand predicted using the first model 127 (i.e., the model 127 trained using just historical demand data 116) and the demand predicted using the second model 127 (i.e., the model 127 trained using the historical demand data 116 and the event data 117).

At 325, whether the difference satisfied a threshold is determined. The determination may be made by the forecasting module 125. The difference may satisfy the threshold when it is less than, or greater than a certain amount. The amount may be set by a user or administrator. If the difference satisfies the threshold, the method 300 may continue to 330. Else the method 300 may return to 310 where the demand is predicted using a different future interval.

At 330, one or more events that likely caused the difference are determined. The one or more events may be determined by the forecasting module 125 using the second forecasting model 127.

At 335, the determined one or more events are displayed to an administrator. The determined one or more events may be displayed to the administrator in a graphical user interface such as the graphical user interface 400 illustrate in FIG. 4. The determined one or more events may be displayed along with the expected increase or decrease in demand that is predicted for each of the one or more events.

FIG. 4 is an illustration of an example graphical user interface 400 that may be used by an administrator to view forecasts 129 and interact with the computing device 110.

As shown, the graphical user interface 400 includes a window 410 through which the administrator can view the forecasts 129 for each of a plurality of intervals. In the example shown, the interval is "Tuesday, 16 Nov" and the predicted forecast 129 includes a predicted call volume of 25, and a predicted average handling time of 45 second. Within the window 410 the administrator can select different days to view the predicted demand or can select different time intervals in which to view the demand (e.g., day, week, or period).

The graphical user interface 400 further includes a window 420 through which the administrator can view the demand predicted for one or more intervals using different forecasting models 127. In the example shown, the administrator is viewing graphs of the call volume predicted for the forecasting models 127 "Neural Network", "Custom Ai", and "ARIMA" (e.g., the graphs 421, 423, and 425) for the time intervals corresponding to 6 AM, 7 AM, 8 AM, 9 AM, 10 AM, 11 AM, 12 AM, 1 PM, 2 PM, and 3 PM of November 16th. Using the window 420, the administrator can select different forecasting models 127 to compare, as well as change the time intervals that are used for the comparison.

In some embodiments, the graphical user interface 400 may allow an administrator ,or other user, to add (and modify) their own forecasting models 127 or other algorithms. For example, an entity such as bank may add a forecasting model 127 that specifically forecasts demand for bank branches. In another example, an entity such as a back office may add a forecasting model 127 that considers a linkage between tasks in a process. The forecasting model 127 selected by an entity may be focused on forecasting the types of demand that are relevant to the entity (e.g., in person visits versus phone calls) and consider the types of employees associated with the entity (e.g., agents versus salespersons). The models 127 may be generated by the entities themselves or sold or otherwise provided to the entities.

The graphical user interface 400 further includes a window 430. The window 430 identifies events ("external factors") that may have an effect on the demand predicted for an interval for the call center. In the example shown, the events include weather events, promotions, and sporting events. Other types of events may be supported. Depending on the embodiment, the administrator may select the types of upcoming events from the event data 117 that are displayed in the window 430.

The graphical user interface 400 further includes a window 440 through which the administrator is recommended a forecasting model 127 to use to generate forecasts 129 for the entity. In the example shown, the administrator is recommended to use the forecasting model 127 "Neural Network" because it has a calculated accuracy of 98.2%. As noted above, the forecasts 129 generated by each forecasting model 127 may be tracked and compared to actual measured demand to determine the accuracy of each forecasting model 127.

The graphical user interface 400 further includes a window 450 through which the administrator is made aware of upcoming events that are predicted to affect demand. In particular, the window 450 indicates that call volume is predicted to increase by 10% while chat volume is predicted to drop 5% on Monday evening due to a basketball game and stormy weather. As noted above, when one or more upcoming events are predicted to effect demand by more than a threshold percentage they may be displayed to the administrator.

The graphical user interface 400 further includes a window 470 through which the administrator is made aware of future intervals that are predicted to have their demand affected by one or more events. In the example shown, the window 470 indicates that during the week of "8 Oct - 14 Oct" overall volume is predicted to drop by 7% and average handling time is predicted to drop by 13% due to "sunny weather." Depending on the embodiment, the administrator may be able to adjust the particular future intervals that are displayed in the window 470.

FIG. 5 shows an exemplary computing environment in which example embodiments and aspects may be implemented. The computing device environment is only one example of a suitable computing environment and is not intended to suggest any limitation as to the scope of use or functionality.

Numerous other general purpose or special purpose computing devices environments or configurations may be used. Examples of well-known computing devices, environments, and/or configurations that may be suitable for use include, but are not limited to, personal computers, server computers, handheld or laptop devices, multiprocessor systems, microprocessor-based systems, network personal computers (PCs), minicomputers, mainframe computers, embedded systems, distributed computing environments that include any of the above systems or devices, and the like.

Computer-executable instructions, such as program modules, being executed by a computer may be used. Generally, program modules include routines, programs, objects, components, data structures, etc. that perform particular tasks or implement particular abstract data types. Distributed computing environments may be used where tasks are performed by remote processing devices that are linked through a communications network or other data transmission medium. In a distributed computing environment, program modules and other data may be located in both local and remote computer storage media including memory storage devices.

With reference to FIG. 5, an exemplary system for implementing aspects described herein includes a computing device, such as computing device 500. In its most basic configuration, computing device 500 typically includes at least one processing unit 502 and memory 504. Depending on the exact configuration and type of computing device, memory 504 may be volatile (such as random access memory (RAM)), non-volatile (such as read-only memory (ROM), flash memory, etc.), or some combination of the two. This most basic configuration is illustrated in FIG. 5 by dashed line 506.

Computing device 500 may have additional features/functionality. For example, computing device 500 may include additional storage (removable and/or non-removable) including, but not limited to, magnetic or optical disks or tape. Such additional storage is illustrated in FIG. 5 by removable storage 508 and non-removable storage 510.

Computing device 500 typically includes a variety of computer readable media. Computer readable media can be any available media that can be accessed by the device 500 and includes both volatile and non-volatile media, removable and non-removable media.

Computer storage media include volatile and non-volatile, and removable and non-removable media implemented in any method or technology for storage of information such as computer readable instructions, data structures, program modules or other data. Memory 504, removable storage 508, and non-removable storage 510 are all examples of computer storage media. Computer storage media include, but are not limited to, RAM, ROM, electrically erasable program read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 600. Any such computer storage media may be part of computing device 500.

Computing device 500 may contain communication connection(s) 512 that allow the device to communicate with other devices. Computing device 500 may also have input device(s) 514 such as a keyboard, mouse, pen, voice input device, touch input device, etc. Output device(s) 516 such as a display, speakers, printer, etc. may also be included. All these devices are well known in the art and need not be discussed at length here.

It should be understood that the various techniques described herein may be implemented in connection with hardware components or software components or, where appropriate, with a combination of both. Illustrative types of hardware components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. The methods and apparatus of the presently disclosed subject matter, or certain aspects or portions thereof, may take the form of program code (i.e., instructions) embodied in tangible media, such as floppy diskettes, CD-ROMs, hard drives, or any other machine-readable storage medium where, when the program code is loaded into and executed by a machine, such as a computer, the machine becomes an apparatus for practicing the presently disclosed subject matter.

Although exemplary implementations may refer to utilizing aspects of the presently disclosed subject matter in the context of one or more stand-alone computer systems, the subject matter is not so limited, but rather may be implemented in connection with any computing environment, such as a network or distributed computing environment. Still further, aspects of the presently disclosed subject matter may be implemented in or across a plurality of processing chips or devices, and storage may similarly be affected across a plurality of devices. Such devices might include personal computers, network servers, and handheld devices, for example.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for forecasting demand for an entity, comprising:
receiving historical demand data for an entity by a computing device, wherein the historical demand data comprises a plurality of historical time intervals and demand data measured for each time interval of the plurality of time intervals;
receiving event data by the computing device, wherein the event data comprises the plurality of historical time intervals and indicators of events that occurred during some or all of the plurality of historical time intervals; and
training a first forecasting model using the received historical demand data and the received event data by the computing device.

2. The method of claim 1, further comprising:
receiving an indicator of a future time interval by the computing device;
determining event data for the future time interval by the computing device; and
estimating demand for the future time interval using the first forecasting model and the determined event data for the future time interval by the computing device.

3. The method of claim 1, wherein the entity comprises one of a call center, a retailer, or a back office.

4. The method of claim 1, wherein the demand data measured for a time interval comprises call volume.

5. The method of claim 1, wherein the event data comprises weather forecasts for a plurality of locations.

6. The method of claim 1, wherein the event data comprises one or more of sporting event data, television or movie event data, product launch data, and intelligence data received from speech or text analytics applications.

7. The method of claim 1, further comprising:
training a second forecasting model using the received historical demand data and without the received event data.

8. The method of claim 7, further comprising:
receiving an indicator of a future time interval;
determining event data for the future time interval;
estimating first demand for the future time interval using the first forecasting model and the determined event data for the future time interval;
estimating second demand for the future time interval using the second forecasting model;
determining that a difference between the first demand and the second demand satisfies a threshold; and
in response to the determination, displaying an indicator of an event from the event data for the future interval that is most likely responsible for the difference.

9. A method for forecasting demand for an entity, comprising:
receiving historical demand data for an entity by a computing device, wherein the historical demand data comprises a plurality of historical time intervals and demand data measured for each time interval of the plurality of time intervals;
receiving event data by the computing device, wherein the event data comprises the plurality of historical time intervals and indicators of events that occurred during some or all of the plurality of historical time intervals;
training a first forecasting model using the received historical demand data and the received event data by the computing device; and
training a second forecasting model using the received historical demand data and without using the received event data by the computing device.

10. The method of claim 9, further comprising:
receiving an indicator of a future time interval;
determining event data for the future time interval;
estimating first demand for the future time interval using the first forecasting model and the determined event data for the future time interval;
estimating second demand for the future time interval using the second forecasting model;
determining that a difference between the first demand and the second demand satisfies a threshold; and
in response to the determination, displaying an indicator of an event from the event data for the future interval that is most likely responsible for the difference.

11. The method of claim 10, further comprising scheduling one or more agents to work during the future time interval based on the estimated first demand or second demand.

12. The method of claim 9, wherein the demand data measured for a time interval comprises volume data for work arriving in the entity, and further wherein the entity is one of a call center, a back office, or a retail operation.

13. The method of claim 9, wherein the event data comprises weather forecasts for a plurality of locations.

14. The method of claim 9, wherein the event data comprises one or more of sporting event data, television or movie event data, product launch data, and intelligence data received from speech or text analytics applications.

15. A system for forecasting demand for an entity, comprising:
at least one computing device; and
a computer-readable medium storing instructions that when executed by the at least one computing device, cause the at least one computing device to:
receive historical demand data for an entity, wherein the historical demand data comprises a plurality of historical time intervals and demand data measured for each time interval of the plurality of time intervals;
receive event data, wherein the event data comprises the plurality of historical time intervals and indicators of events that occurred during some or all of the plurality of historical time intervals; and
train a first forecasting model using the received historical demand data and the received event data.

16. The system of claim 15, further comprising instructions that when executed by the at least one computing device, cause the at least one computing device to:
receive an indicator of a future time interval by the computing device;
determine event data for the future time interval by the computing device; and
estimate demand for the future time interval using the first forecasting model and the determined event data for the future time interval by the computing device.

17. The system of claim 16, further comprising instructions that when executed by the at least one computing device, cause the at least one computing device to: schedule one or more agents to work during the future time interval based on the estimated demand.

18. The system of claim 15, wherein the demand data measured for a time interval comprises work volume.

19. The system of claim 15, wherein the event data comprises weather forecasts for a plurality of locations.

20. The system of claim 15, wherein the event data comprises one or more of sporting event data, television or movie event data, product launch data, and intelligence data received from speech or text analytics applications.
